# EUROPEAN PATENT APPLICATION

(11) **EP 4 804 355 A1**
(43) Date of publication of application: **09.09.2026**
(21) Application number: 24886138.7
(22) Date of filing: 24.10.2024
(51) Int. Cl.: H02G 1/08, H02G 15/08, E02B 17/00

(54) **FIELD REPAIR JOINT FOR SUBMARINE CABLE AND SUBMARINE CABLE RESTRAINING METHOD THEREOF**

(30) Priority: 01.11.2023 KR 20230149514
(71) Applicant: Tai Han Electric Wire Co., Ltd., Anyang-si, Gyeonggi-do 14055 (KR)
(72) Inventor: SHIN, Woo-Ju, Dangjin-si, Chungcheongnam-do 31792 (KR); HAN, Du-Hyoun, Dangjin-si, Chungcheongnam-do 31792 (KR); KIM, Seong-Youn, Dangjin-si, Chungcheongnam-do 31792 (KR)
(74) Representative: Ter Meer Steinmeister & Partner
(86) International application number: PCT/KR2024/016294
(87) International publication number: WO 2025/095463

(57) **Abstract**

The present invention relates to a field repair joint, and more particularly, to a field repair joint that can easily and quickly repair a submarine cable at sea, prevent detachment of a submarine cable, and stably restrain a submarine cable. A field repair joint according to one embodiment of the present invention comprises: an outer case having a tubular shape with a hollow interior; and flanges configured to be coupled respectively to both ends of the outer case, wherein the flange comprises: a first part disposed inside the outer case and having a plate shape in which a first through-hole is formed; a second part comprising a tubular base portion having a second through-hole, and a first ring portion disposed at one end of the base portion and arranged to face the first part; and a third part having a volume that allows it to be disposed inside the second through-hole, having a third through-hole, and having a truncated cone shape that is accommodated inside the second through-hole by the first part.

## Description

### TECHNICAL FIELD

The present invention relates to a field repair joint for a submarine cable and a method for restraining a submarine cable thereof. More particularly, the present invention relates to a field repair joint for a submarine cable and a method for restraining a submarine cable thereof, which can easily and quickly repair a submarine cable at sea, prevent detachment of the submarine cable due to a load, and stably restrain the submarine cable.

### BACKGROUND ART

A submarine cable is a cable installed on the seabed for transmitting electric power between two points across the sea.

For a submarine cable, it is very important to ensure firm connection between cables at the time of initial installation, to ensure watertightness of the connection portion, and to perform rapid and economical maintenance when the cable is damaged due to seawater currents caused by climate change, special fishing gear caused by fishing activities, or anchors of anchored fishing vessels.

When the initial installation of the submarine cable, that is, the connection of the communication means is applied to a short distance, a single cable can be directly laid on the seabed, so that both ends thereof can be connected to the respective communication means. However, in the case of connection between regions spaced apart by a long distance of more than several tens of kilometers, installation by a single cable is impossible, and therefore two or more cables are connected to each other using a joint device, and laid on the seabed in the connected state. In addition, when damage occurs to the submarine cable laid on the seabed as described above due to severe climate change and fishing activities, the submarine cable is towed up to the vessel, the damaged portion of the cable is cut, a spare cable is positioned in the middle, and connections are made on both sides using joint devices, thereby repairing the damaged portion of the submarine cable.

In the submarine cable joint device, the core technology is to maintain a firm coupling state without deformation against pulling after coupling and connection with the submarine cable, and at the same time to ensure watertightness inside the joint device even during long-term use. In addition, convenience of assembly construction and movement-installation according to the connection work between submarine cables must be ensured.

The average expected lifespan of a submarine cable is approximately 20 to 25 years; however, the submarine cable may be damaged due to unforeseen circumstances under the sea. The damaged submarine cable can be repaired aboard a vessel at sea using a Field Repair Joint (FRJ).

When the submarine cable repaired in the field repair joint aboard the vessel is then installed in the sea, a load due to the self-load of the submarine cable is generated at both ends of the field repair joint. In order to prevent detachment of the submarine cable due to such load, conventionally, the submarine cable has been fixed to the field repair joint using a predetermined device having a restraining force.

### PRIOR ART DOCUMENTS

### PATENT DOCUMENT

(Patent Document 1) Republic of Korea Laid-open Patent Publication No. 10-2014-0115509 (October 1, 2014)

### DISCLOSURE OF INVENTION

### TECHNICAL PROBLEM

A problem to be solved by the present invention is to provide a field repair joint for a submarine cable and a method for restraining a submarine cable thereof, which can prevent detachment of a submarine cable due to the self-load of the submarine cable.

In addition, another problem is to provide a field repair joint for a submarine cable and a method for restraining a submarine cable thereof, which can stably restrain an installed submarine cable.

In addition, still another problem is to provide a field repair joint for a submarine cable and a method for restraining a submarine cable thereof, which can prevent the penetration of moisture such as seawater from the outside to the inside.

### TECHNICAL SOLUTION

A field repair joint according to one embodiment of the present invention comprises: an outer case having a tubular shape with a hollow interior; and flanges configured to be coupled respectively to both ends of the outer case, wherein the flange comprises: a first part disposed inside the outer case and having a plate shape in which a first through-hole is formed; a second part comprising a tubular base portion having a second through-hole and a first ring portion disposed at one end of the base portion and arranged to face the first part; and a third part having a volume that allows it to be disposed inside the second through-hole, having a third through-hole, and having a truncated cone shape that is accommodated inside the second through-hole by the first part.

A field repair joint according to another embodiment of the present invention comprises: a cylindrical outer case; and flanges configured to be coupled to openings at both ends of the outer case, wherein the flange comprises a disc, a cylindrical portion, and a truncated cone for fixing a plurality of steel wires of the submarine cable, each of the disc, the cylindrical portion, and the truncated cone has a through-hole through which the submarine cable can be inserted, the truncated cone is disposed inside the through-hole of the cylindrical portion through one-side opening of the cylindrical portion, the disc is disposed so as to close the one-side opening of the cylindrical portion, a portion of the plurality of steel wires of the submarine cable is configured to be inserted between an inner side surface of the cylindrical portion that defines the through-hole of the cylindrical portion and an outer side surface of the truncated cone, and another portion of the plurality of steel wires of the submarine cable is configured to be inserted between one-side end portion of the cylindrical portion and the disc.

A method according to still another embodiment of the present invention is a method for restraining a submarine cable, which includes a plurality of steel wires and a sheath layer surrounding the plurality of steel wires, to the field repair joint of claim 1, comprising: a step of removing the sheath layer at an end of the submarine cable to expose the plurality of steel wires to the outside; a step of passing the submarine cable through the second through-hole of the second part and then bending the plurality of steel wires outward; a step of passing the submarine cable through the third through-hole of the third part and then inserting the third part into the second through-hole, so that the plurality of steel wires are inserted between the second part and the third part; a step of passing the submarine cable through the first through-hole of the first part and then pressing the first part toward the first ring portion of the second part; a step of coupling the first part and the first ring portion through fastening means so that the first part is brought into close contact with the first ring portion as much as possible, whereby the plurality of steel wires are inserted between the first part and the first ring portion; a step of cutting off the end portions of the plurality of steel wires that are exposed to the outside from those inserted between the first part and the first ring portion; and a step of injecting a liquid compound into an injection hole connected to the second through-hole of the base portion and curing the liquid compound.

### ADVANTAGEOUS EFFECTS

According to the field repair joint for a submarine cable and the method for restraining a submarine cable thereof of the present invention, detachment of the submarine cable due to the self-load of the submarine cable can be prevented.

In addition, an installed submarine cable can be stably restrained.

In addition, the penetration of moisture such as seawater from the outside to the inside can be prevented.

### BRIEF DESCRIPTION OF DRAWINGS

FIG. 1 (a) and (b) are views illustrating examples of submarine cables that can be installed in a field repair joint according to one embodiment of the present invention.
FIG. 2 is a perspective view of a field repair joint according to one embodiment of the present invention, which can repair or restore the submarine cable shown in FIG. 1 aboard a vessel at sea.
FIG. 3 is an enlarged perspective view of a portion of the field repair joint according to one embodiment of the present invention shown in FIG. 2.
FIG. 4 is an exploded perspective view showing only the first flange (300a) shown in FIG. 3.
FIG. 5 is a cross-sectional perspective view in which the second part (330) and the third part (350) shown in FIG. 4 are coupled.
FIG. 6 is an enlarged view of A in FIG. 5.
FIG. 7 is a perspective view of an end portion of the submarine cable shown in FIG. 1 (b) for being coupled to the first flange (300a) shown in FIGS. 2 to 6.
FIGS. 8 to 13 are views for explaining a method of restraining the submarine cable shown in FIG. 7 to the first flange (300a) shown in FIGS. 2 to 6.
FIG. 14 is a conceptual view showing a state in which the submarine cable is repaired inside the field repair joint according to one embodiment of the present invention shown in FIG. 2.

### DETAILED DESCRIPTION OF EMBODIMENTS

The detailed description of the present invention described hereinafter refers to the accompanying drawings, which illustrate, by way of example, specific embodiments in which the present invention may be practiced. These embodiments are described in sufficient detail to enable those skilled in the art to practice the present invention. It should be understood that various embodiments of the present invention are different from each other but need not be mutually exclusive.

Submarine cables include alternating current (AC) submarine cables and direct current (DC) submarine cables.

The AC submarine cable is mainly used for medium-to-long distances (100 km or less) due to the advantage that no additional cost is incurred when interconnected with an existing underground grid system, and a three-core or single-core submarine cable can be applied. Generally, XLPE insulation is applied, and XLPE-insulated cables are widely used for submarine cables due to advantages such as easy laying and maintenance, simple connection and repair, and excellent chemical and electrical properties.

The DC submarine cable, since the maximum voltage is lower compared to AC voltage, allows the insulator to be made thinner, thereby enabling cost reduction, and unlike AC, there are no losses related to frequency (sheath loss, dielectric loss, etc.). In addition, since it can be interconnected with other power systems having different frequencies and voltages, there is an advantage that there are no electrical or technical restrictions when interconnecting between countries.

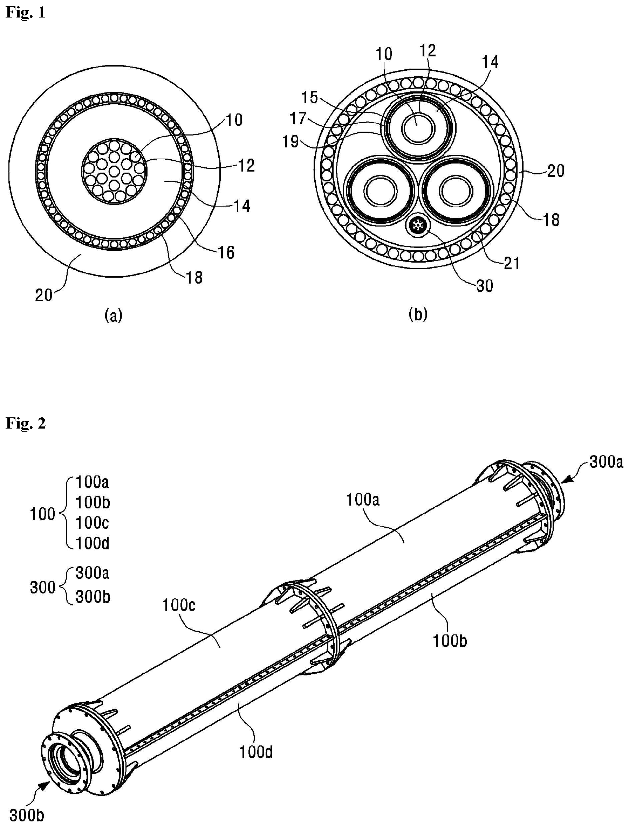

Hereinafter, the structure of the submarine cable will be examined with reference to FIG. 1.

FIG. 1 (a) and (b) are views illustrating examples of submarine cables that can be installed in a field repair joint (FRJ) according to one embodiment of the present invention.

The submarine cable shown in FIG. 1 (a) is an example of a DC submarine cable.

Referring to FIG. 1 (a), the DC submarine cable comprises a conductor (10), an inner semiconductive layer (12), an insulation layer (14), an outer semiconductive layer (16), a steel wire layer (18), and a sheath layer (20).

The conductor (10) is disposed at the central portion and serves as a passage through which electric current flows. For example, the conductor (10) is composed of copper or aluminum. The conductor (10) may also be composed of a plurality of strands.

The inner semiconductive layer (12) surrounds the conductor (10) and uniformizes the charge distribution on the conductor surface to make the electric field uniform, thereby improving the dielectric strength of the insulation layer (14) described below. Furthermore, it prevents the formation of a gap between the conductor (10) and the insulation layer (14), thereby preventing corona discharge and ionization. In addition, the inner semiconductive layer (12) also serves to prevent the insulation layer (14) from penetrating into the conductor (10) during the manufacture of the DC submarine cable.

The insulation layer (14) surrounds the inner semiconductive layer (12) and electrically insulates the conductor (10) from the outside. The insulation layer (14) may be made of, for example, a material such as XLPE (Cross-linked Polyethylene).

The outer semiconductive layer (16) surrounds the insulation layer (14) and serves to make the distribution of electric lines of force between the inner semiconductive layer (12) and the outer semiconductive layer (16) equipotential, thereby improving the dielectric strength of the insulation layer (14).

On the outside of the outer semiconductive layer (16), depending on the type of cable, a shielding layer (not shown) made of a metal sheath or a steel wire layer (18) is provided. The shielding layer or the steel wire layer (18) is provided for electrical shielding and for the return path of short-circuit current.

A sheath layer (20) is provided at the outermost portion of the DC submarine cable. The sheath layer (20) serves to protect the components located inside. The sheath (20) is composed of a material having excellent weather resistance, chemical resistance against chemicals and the like, and mechanical strength so as to withstand various climates and natural environments such as light, wind and rain, moisture, and gases in the air. For example, it may be made of PVC (Polyvinyl chloride) or PE (Polyethylene).

The submarine cable shown in FIG. 1 (b) is an example of an AC submarine cable.

Referring to FIG. 1 (b), the AC submarine cable comprises three inner cables and an optical cable (30).

Each of the inner cables comprises a conductor (10), an inner semiconductive layer (12), an insulation layer (14), an outer semiconductive layer (15), a metal sheath layer (17), and an anti-corrosion layer (19). In addition, it further comprises a bedding layer (21) surrounding the three inner cables and the optical cable (30), a plurality of steel wires (18) surrounding the bedding layer (21), and a sheath layer (20) surrounding the plurality of steel wires (18).

The field repair joint according to one embodiment of the present invention is a joint for connecting a damaged submarine cable at sea when a failure occurs in the submarine cable shown in FIG. 1 (a) or (b) installed in the sea. Such a field repair joint can withstand axial stress generated by loads during installation, thereby preventing shearing force on the connecting member. As compared with a conventional onshore joint installed on land, this joint is for connecting a submarine cable at sea where the installation environment and external conditions are unfavorable.

Hereinafter, the field repair joint according to one embodiment of the present invention will be examined with reference to FIGS. 2 to 14.

FIG. 2 is a perspective view of a field repair joint according to one embodiment of the present invention, which can repair or restore the submarine cable shown in FIG. 1 aboard a vessel at sea.

Referring to FIG. 2, the field repair joint according to one embodiment of the present invention comprises an outer case (100) and a flange (300).

The outer case (100) has a tubular shape with a hollow interior. For example, the outer case (100) may be cylindrical, polygonal, oval, or the like. In the drawings, the outer case is representatively illustrated as cylindrical. Both ends of the outer case (100) are open, and a flange (300) is coupled to each of both ends.

The outer case (100) is a device that allows withstanding mechanical stress caused by external force, and may not have a waterproofing function in itself.

The outer case (100) comprises a plurality of outer cases (100a, 100b, 100c, 100d). For example, the outer case (100) may be composed of four first to fourth outer cases (100a, 100b, 100c, 100d). The first to fourth outer cases (100a, 100b, 100c, 100d) may be coupled to constitute the cylindrical outer case (100).

The third outer case (100c) is disposed on one side of the first outer case (100a), the fourth outer case (100d) is disposed on one side of the second outer case (100b), the second outer case (100b) is disposed below the first outer case (100a), and the fourth outer case (100b) may be disposed below the third outer case (100c). These may be firmly fastened to each other using fastening means such as bolts and nuts.

When the outer case (100) is composed of the first to fourth outer cases (100a, 100b, 100c, 100d), it is easy to surround the repaired submarine cable with the first to fourth outer cases (100a, 100b, 100c, 100d) after electrically and physically connecting the damaged or cut submarine cable. Therefore, the repair of the submarine cable can be quickly and easily completed.

The material of the outer case (100) may be composed of a material that can mitigate or prevent the occurrence of rust and that can withstand high external water pressure on the seabed.

The flanges (300) are respectively coupled to both end portions of the cylindrical outer case (100). The flange (300) comprises a first flange (300a) coupled to one end portion of the outer case (100), and a second flange (300b) coupled to the other end portion of the outer case (100).

A submarine cable is firmly and stably fastened to each of the first and second flanges (300a, 300b). The end of a first submarine cable is fastened to the first flange (300a), and the end of a second submarine cable is fastened to the flange (300b). Here, the first submarine cable and the second submarine cable may be different submarine cables from each other. Alternatively, the first submarine cable and the second submarine cable may originally have been a single submarine cable, of which a portion has been separated by an external force into two pieces.

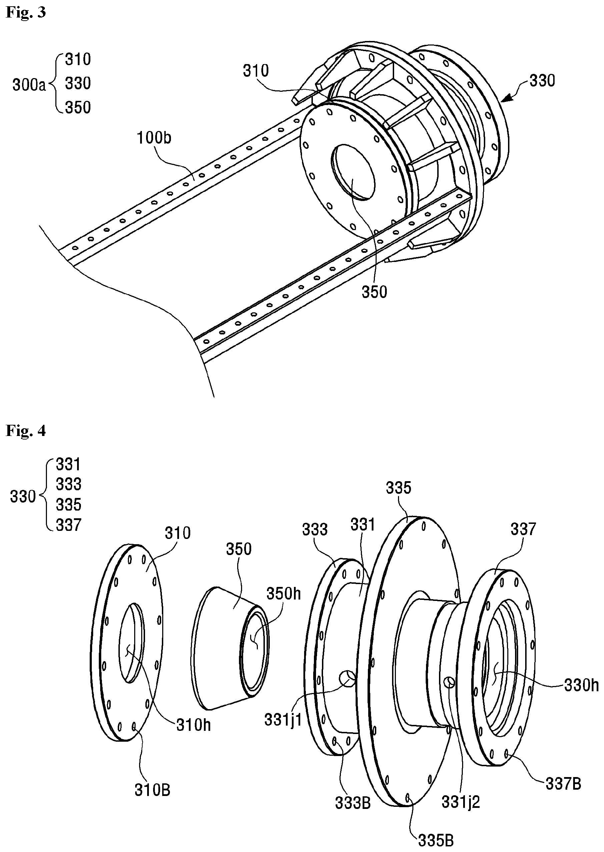

The detailed configuration of each flange (300) will be examined with reference to FIGS. 3 to 6. Here, since the first flange (300a) and the second flange (300b) are identical to each other, hereinafter, only the first flange (300a) will be described, and the description of the second flange (300b) will be replaced by the description of the first flange (300a).

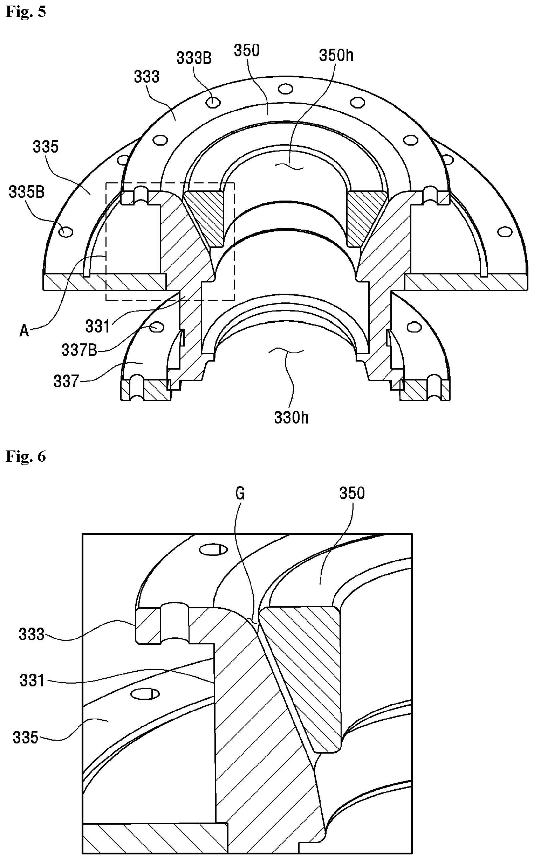

FIG. 3 is an enlarged perspective view of a portion of the field repair joint according to one embodiment of the present invention shown in FIG. 2; FIG. 4 is an exploded perspective view of only the first flange (300a) shown in FIG. 3; FIG. 5 is a cross-sectional perspective view in which the second part (330) and the third part (350) shown in FIG. 4 are coupled; and FIG. 6 is an enlarged view of A in FIG. 5.

Referring to FIGS. 2 to 6, the first flange (300a) comprises a first part (310), a second part (330), and a third part (350).

The first part (310) has a plate shape in which a first through-hole (310h) is formed at the center. Here, the plate may be a disc plate. The submarine cable shown in FIG. 1 may be disposed in the first through-hole (310h). The cross-sectional shape of the first through-hole (310h) may be circular, corresponding to the outer shape of the submarine cable.

The first part (310) is disposed inside the outer case (100). The first part (310) may have a shape and size corresponding to the inner diameter of the outer case.

A plurality of fastening holes (310B) are formed at the edge of the first part (310). In the fastening holes (310B), fastening means such as bolts inserted into fastening holes (333B) of the first ring portion (333) of the second part (330) may be disposed.

The second part (330) comprises a base portion (331), a first ring portion (333), a second ring portion (335), and a third ring portion (337).

The base portion (331) has a second through-hole (330h) in which the submarine cable shown in FIG. 1 can be disposed. The cross-sectional shape of the second through-hole (330h) may be circular, corresponding to the outer shape of the submarine cable.

The base portion (331) may have a cylindrical shape.

The base portion (331) has one or more injection holes (331j1, 331j2) connected to the second through-hole (330h). The injection holes (331j1, 331j2) are holes used for the purpose of injecting a liquid waterproof compound. The liquid compound serves to fill the spaces or gaps between the first flange (300a) and the submarine cable after the submarine cable shown in FIG. 1 is coupled to the first flange (300a). The liquid compound is cured over time, thereby preventing moisture from penetrating into the spaces or gaps between the first flange (300a) and the submarine cable.

The first ring portion (333) is disposed at one end of the base portion (331) and is arranged to face the first part (310). The first ring portion (333) has a width or diameter larger than that of the base portion (331). The first ring portion (333) is disposed inside the outer case (100) together with the first part (310). The first ring portion (333) has a shape corresponding to the outer shape of the base portion (331). When the base portion (331) is cylindrical, the first ring portion (333) has a circular ring shape.

A plurality of fastening holes (333B) are formed at the edge of the first ring portion (333). In the fastening holes (333B), fastening means such as bolts inserted into the fastening holes (310B) of the first part (310) may be disposed so as to pass therethrough.

The second ring portion (335) is disposed at the middle portion between one-side end portion and the other-side end portion of the base portion (331), and has a width or diameter larger than that of the first ring portion (333) and the third ring portion (335).

The second ring portion (335) is directly fastened to the outer case (100). The second ring portion (335) and the outer case (100) may be fastened to each other through fastening means such as bolts and nuts.

A plurality of fastening holes (335B) are formed at the edge of the second ring portion (335). In the fastening holes (335B), fastening means such as bolts inserted into the fastening holes of the outer case (100) may be disposed so as to pass therethrough.

The third ring portion (337) is disposed at the other end of the base portion (331). The third ring portion (337) has a width or diameter larger than that of the base portion (331).

The third ring portion (337), although not shown in the drawings, may be fastened to a bending controller (not shown) for adjusting the bending degree of the submarine cable. The bending controller (not shown) may be fastened to a bend stiffener or a bend restrictor. The third ring portion (337) and the bending controller (not shown) may be coupled to each other through fastening means such as bolts and nuts. A plurality of fastening holes (337B) are formed at the edge of the third ring portion (337). In the fastening holes (337B), fastening means such as bolts inserted into the fastening holes of the bending controller (not shown) may be disposed so as to pass therethrough.

The third part (350) is disposed inside the second through-hole (330h) of the second part (330). The third part (350) may be disposed inside one-side end portion of the base portion (331) of the second part (330).

The third part (350) has a truncated cone shape. Here, the truncated cone may be a circular truncated cone.

The third part (350) has therein a third through-hole (350h) in which the submarine cable shown in FIG. 1 can be disposed. The diameter of the third through-hole (350h) is constant, but is smaller than the diameter of the second through-hole (330h) of the base portion (331).

The thickness of the one-side end portion of the base portion (331) surrounding the third part (350) becomes thicker in the direction from the first ring portion (333) toward the second ring portion (335). Such a shape prevents the truncated-cone-shaped third part (350) from escaping through the second through-hole (330h) of the second part (330) when the third part (350) is inserted into the second through-hole (330h) of the second part (330).

The third part (350) has a shape corresponding to the inner space of the one-side end portion of the base portion (331), but its volume is smaller than the volume of the inner space. Accordingly, a predetermined gap (G) is formed between the inner side surface of the base portion (331) of the second part (330) and the outer side surface of the third part (350). The plurality of steel wires (18) of the submarine cable shown in FIG. 1 are disposed in the gap (G).

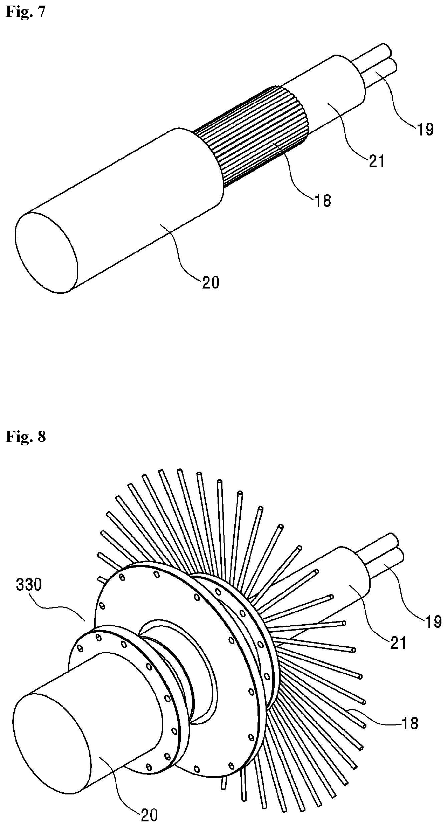

FIG. 7 is a perspective view of an end portion of the submarine cable shown in FIG. 1 (b) for being coupled to the first flange (300a) shown in FIGS. 2 to 6.

Referring to FIG. 7, when the sheath layer (20) of the end portion of the submarine cable shown in FIG. 1 (b) is removed, the plurality of steel wires (18) are exposed; when the ends of the plurality of steel wires (18) are removed, the bedding layer (21) is exposed to the outside; and when the end of the bedding layer (21) is removed, the anti-corrosion layer (19) of the inner cable is exposed.

FIGS. 8 to 13 are views for explaining a method of restraining the submarine cable shown in FIG. 7 to the first flange (300a) shown in FIGS. 2 to 6.

Referring to FIG. 8, the end portion of the submarine cable is passed through the through-hole (330h, see FIG. 4) of the second part (330), so that the second part (330) is positioned on the sheath layer (20) of the submarine cable. Then, each of the steel wires (18) exposed to the outside is bent outward. The bent steel wires (18) are arranged in a radial form.

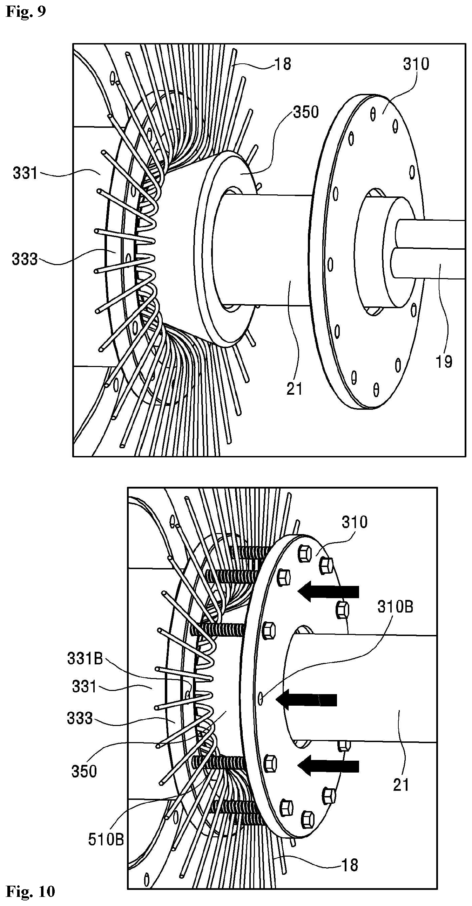

Next, referring to FIG. 9, the third part (350) is fitted onto the end portion of the submarine cable, and likewise, the first part (310) is fitted onto the end portion of the submarine cable. The third part (350) and the first part (310) are positioned on the bedding layer (21) of the submarine cable.

Next, referring to FIG. 10, the third part (350) and the first part (310) are pushed toward the second part (330), so that the third part (350) enters the inside of the base portion (331) of the second part (330), and the first part (310) is brought close to the first ring portion (333) of the second part (330).

When the first part (310) becomes somewhat close to the first ring portion (333) of the second part (330), a bolt (510B) is sequentially inserted into the fastening hole (310B) of the first part (310) and the fastening hole (333B) of the second part (330), and a nut (not shown) is fastened to the end of the bolt (510B). Bolts (510B) are also inserted into other fastening holes, and nuts (not shown) are fastened thereto.

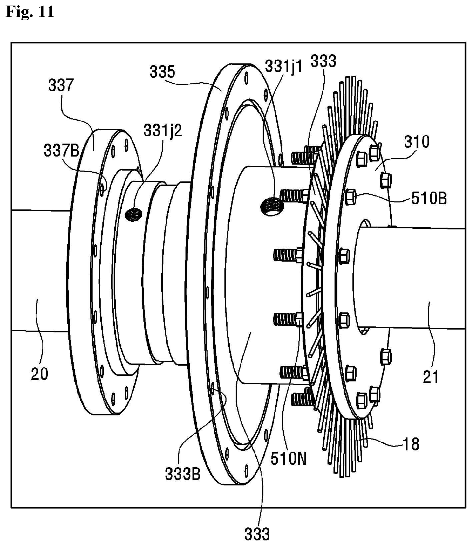

Next, referring to FIG. 11, each bolt (510B) and nut (510N) are tightened as much as possible, so that the first part (310) is brought as close as possible to the first ring portion (333) of the second part (330). The steel wires (18) are tightly inserted and arranged between the first part (310) and the second part (330).

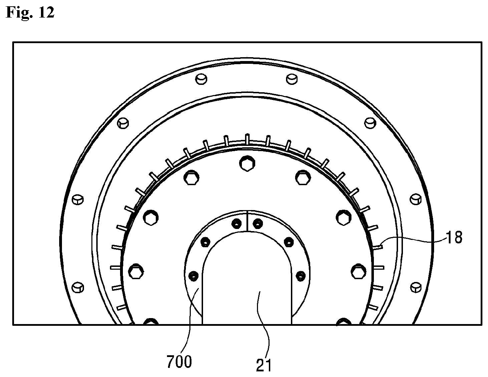

Next, referring to FIG. 12, the portion of each steel wire (18) exposed to the outside is cut off as much as possible. Meanwhile, in order to close the gap between the first part (310) and the bedding layer (21) of the submarine cable, a shielding plate (700) may be further disposed.

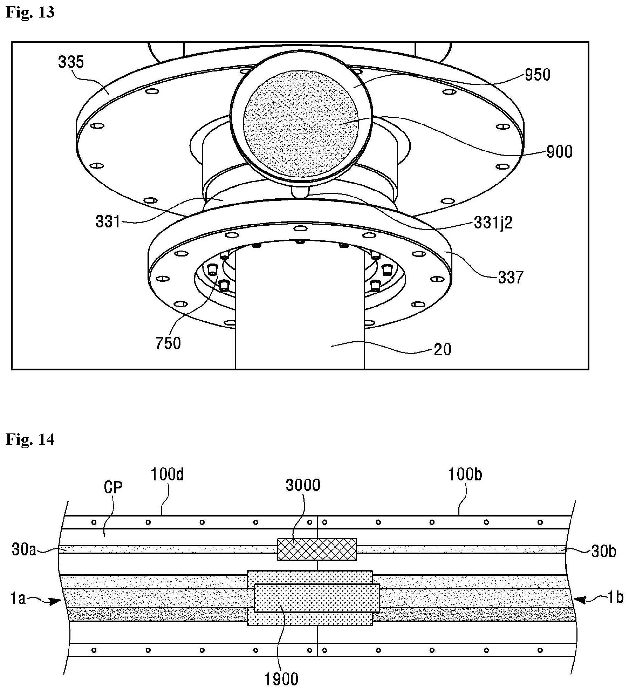

Next, referring to FIG. 13, a liquid compound (900) is injected into the injection holes (331j1, 331j2) formed in the base portion (331) of the second part (330). The liquid compound (900) has adhesive force when cured, and is for enhancing the binding force (mechanical performance) with other components in contact therewith. Using a funnel (950), the liquid compound (900) can be injected into the injection holes (331j1, 331j2). The injected liquid compound (900) can fill, inside the second through-hole (330h) of the second part (330), the gaps and spaces between the steel wires (18) of the submarine cable, the gap (G) between the second part (330) and the third part (350) in which the steel wires (18) are inserted, and the gaps and spaces between the first part (310) and the second part (330) in which the steel wires (18) are inserted. Thereafter, when the liquid compound (900) is cured, it shrinks, and the binding force with the steel wires (18) of the submarine cable is improved.

Meanwhile, in order to close the gap between the second part (330) and the sheath layer (20) of the submarine cable, an additional shielding plate (750) may be further disposed.

FIG. 14 is a conceptual view showing a state in which the submarine cable is repaired inside the field repair joint according to one embodiment of the present invention shown in FIG. 2.

Referring to FIG. 14, the inner cable (1a) on one side and the inner cable (1b) on the other side are electrically and physically connected to each other inside an inner case (1900), and the optical cable (30a) on one side and the optical cable (30b) on the other side are electrically and physically connected to each other inside an optical fiber joint enclosure (3000).

The three inner cables (1a) and one optical cable (30a) disposed on one side are included in one submarine cable (or the first submarine cable), and the three inner cables (1b) and one optical cable (30b) disposed on the other side are included in another submarine cable (or the second submarine cable).

Inside the inner case (1900), the conductor of the inner cable (1a) on one side and the conductor of the inner cable (1b) on the other side are electrically and physically connected to each other.

The inner case (1900) may have a structure that is separated into at least two or more pieces, and may be made of copper. The inner case (1900) may maintain waterproofness through lead soldering.

The inner case (1900) may be taped on the outside with a plurality of tapes.

The optical fiber joint enclosure (3000) may comprise an inner enclosure made of resin material and an outer enclosure made of metal material. The optical fiber joint enclosure (3000) uses a double enclosure to stably and electrically and physically connect the optical cables to each other and to prevent moisture penetration from the outside. Inside the inner enclosure, the optical cable (30a) on one side and the optical cable (30b) on the other side may be electrically connected to each other.

The optical fiber joint enclosure (300) may be taped on the outside with a plurality of tapes.

A compound (CP) for waterproofing may be filled inside the outer cases (100d, 100b). The compound (CP) may be a polyurethane-based compound, rather than an epoxy-based compound. The epoxy-based material has the disadvantages that it is weaker against pressure than the polyurethane-based material, that cracks occur relatively frequently, and that the installation time is long. Since the field repair joint according to the embodiment of the present invention is subjected to high pressure underwater, has a high possibility of moisture penetration into the inside when cracks occur, and requires installation as quickly as possible at sea, it is preferable that the compound (CP) be made of polyurethane material. The polyurethane-based compound (CP) may be one manufactured through performance tests of various material properties (pressure, strength, and contact force) according to special environments such as underwater.

When the field repair joint according to one embodiment of the present invention shown in FIGS. 2 to 14 described above is used, in the case where damage or an accident occurs to the submarine cable, the damaged submarine cable can be quickly and easily repaired or restored aboard a vessel at sea (a laying vessel or a repair vessel).

In addition, even when the submarine cable connected to the field repair joint according to the embodiment of the present invention is installed in the sea, it can withstand the axial stress caused by the self-load of the submarine cable. In particular, it can also withstand various external forces generated when the field repair joint is lowered into the sea by a crane after being installed aboard the vessel.

In addition, the field repair joint according to the embodiment of the present invention can prevent moisture from penetrating into the inside due to external water pressure depending on the sea depth. In particular, in order to prevent moisture penetration due to the external water pressure, a compound having excellent interfacial contact force is injected into the inside of the field repair joint, thereby preventing moisture penetration.

In addition, the field repair joint according to the embodiment of the present invention can maintain an immersed state in the sea for a long period of at least about 20 years or more. In particular, as long as electrically significant moisture penetration does not occur, the occurrence of rust on the outer jacket can be prevented.

Although the embodiments of the present invention have been described above with reference to the accompanying drawings, these are merely examples and do not limit the present invention, and those skilled in the art to which the present invention pertains will appreciate that various modifications and applications not exemplified above are possible without departing from the essential characteristics of the present embodiments. For example, each component specifically shown in the embodiments can be modified and implemented. Furthermore, the differences related to such modifications and applications should be construed as being included within the scope of the present invention as defined in the appended claims.

### EXPLANATION OF REFERENCE NUMERALS

100: Outer case
300: Flange

## Claims

1. A field repair joint, comprising:
an outer case having a tubular shape with a hollow interior; and
flanges configured to be coupled respectively to both ends of the outer case,
wherein each of the flanges comprises:
a first part disposed inside the outer case and having a plate shape in which a first through-hole is formed;
a second part comprising a tubular base portion having a second through-hole, and a first ring portion disposed at one end of the base portion and arranged to face the first part; and
a third part having a volume that allows it to be disposed inside the second through-hole, having a third through-hole, and having a truncated cone shape that is accommodated inside the second through-hole by the first part.

2. The field repair joint of claim 1, wherein the outer case comprises first to fourth outer cases coupled to each other,
the second outer case is disposed below the first outer case,
the fourth outer case is disposed below the third outer case, and
the third outer case is disposed on one side of the first outer case.

3. The field repair joint of claim 1, wherein the first part and the first ring portion are coupled through a plurality of fastening means.

4. The field repair joint of claim 1, wherein, when the first part is coupled to the first ring portion, the third part is disposed inside one-side end portion of the base portion, and
the thickness of the one-side end portion of the base portion becomes thicker in the direction from one end of the base portion toward the other end thereof.

5. The field repair joint of claim 4, wherein, when the first part is coupled to the first ring portion, the third part is enclosed inside the second through-hole, and a predetermined gap is formed between the third part and the base portion.

6. The field repair joint of claim 1, wherein the base portion has at least one or more injection holes that are connected to the second through-hole and into which a liquid compound can be injected, and
the liquid compound is for enhancing the binding force with a plurality of steel wires of a submarine cable.

7. The field repair joint of claim 1, wherein the second part comprises:
a second ring portion disposed at the middle portion of the base portion and coupled to the outer case; and
a third ring portion disposed at the other end of the base portion and coupled to a bending controller configured to adjust the bending degree of the submarine cable.

8. The field repair joint of claim 7, wherein the width or diameter of the second ring portion is larger than the width or diameter of the first part and the first ring portion.

9. A field repair joint, comprising:
a cylindrical outer case; and
flanges configured to be coupled to openings at both ends of the outer case,
wherein the flange comprises a disc, a cylindrical portion, and a truncated cone for fixing a plurality of steel wires of a submarine cable,
each of the disc, the cylindrical portion, and the truncated cone has a through-hole through which the submarine cable can be inserted,
the truncated cone is disposed inside the through-hole of the cylindrical portion through one-side opening of the cylindrical portion,
the disc is disposed so as to close the one-side opening of the cylindrical portion,
a portion of the plurality of steel wires of the submarine cable is configured to be interposed between an inner side surface of the cylindrical portion that defines the through-hole of the cylindrical portion and an outer side surface of the truncated cone, and
another portion of the plurality of steel wires of the submarine cable is configured to be interposed between one-side end portion of the cylindrical portion and the disc.

10. The field repair joint of claim 9, wherein the outer case comprises first to fourth outer cases having a semi-cylindrical shape,
the second outer case is disposed below the first outer case,
the fourth outer case is disposed below the third outer case, and
the third outer case is disposed on one side of the first outer case.

11. The field repair joint of claim 9, wherein the disc and one-side end portion of the cylindrical portion are coupled through a plurality of fastening means.

12. The field repair joint of claim 9, wherein the thickness of the cylindrical portion surrounding the truncated cone becomes thicker in the direction from the one-side opening of the cylindrical portion toward the other-side opening thereof.

13. The field repair joint of claim 9, wherein the cylindrical portion has at least one or more injection holes that are connected to the through-hole of the cylindrical portion and into which a liquid compound can be injected, and
the liquid compound is for enhancing the binding force with the plurality of steel wires of the submarine cable.

14. The field repair joint of claim 8, comprising:
a first ring portion disposed on a side of the one-side opening of the cylindrical portion;
a second ring portion disposed between the one-side opening and the other-side opening of the cylindrical portion and coupled to the outer case; and
a third ring portion disposed on a side of the other-side opening of the cylindrical portion and coupled to a bending controller configured to adjust the bending degree of the submarine cable.

15. The field repair joint of claim 14, wherein the diameter of the second ring portion is larger than the diameter of the first part and the first ring portion.

16. A method for restraining a submarine cable, which comprises a plurality of steel wires and a sheath layer surrounding the plurality of steel wires, to the field repair joint of claim 1, the method comprising:
a step of removing the sheath layer at an end of the submarine cable to expose the plurality of steel wires to the outside;
a step of passing the submarine cable through the second through-hole of the second part, and then bending the plurality of steel wires outward;
a step of passing the submarine cable through the third through-hole of the third part, and then inserting the third part into the second through-hole, so that the plurality of steel wires are inserted between the second part and the third part;
a step of passing the submarine cable through the first through-hole of the first part, and then pressing the first part toward the first ring portion of the second part;
a step of coupling the first part and the first ring portion through fastening means so that the first part is brought into close contact with the first ring portion as much as possible, whereby the plurality of steel wires are inserted between the first part and the first ring portion;
a step of cutting off the end portions of the plurality of steel wires that are exposed to the outside, from those inserted between the first part and the first ring portion; and
a step of injecting, into an injection hole connected to the second through-hole of the base portion, a liquid compound for enhancing the binding force with the plurality of steel wires of the submarine cable, and curing the liquid compound.

17. The method for restraining a submarine cable to a field repair joint of claim 16, further comprising:
a step of disposing a shielding plate for closing a gap between the first through-hole of the first part and the submarine cable, and a gap between the other end of the second part and the submarine cable.
